# EUROPEAN PATENT APPLICATION

(11) **EP 4 644 305 A1**
(43) Date of publication of application: **05.11.2025**
(21) Application number: 24874927.7
(22) Date of filing: 30.09.2024
(51) Int. Cl.: B65H 19/28, B65H 19/26, H01M 4/04

(54) **METHOD FOR REPLACING BOBBIN**

(30) Priority: 05.10.2023 KR 20230132331
(71) Applicant: LG Energy Solution, Ltd., Seoul 07335 (KR)
(72) Inventor: PARK, Chan Min, Daejeon 34122 (KR); PARK, Jin Hui, Daejeon 34122 (KR); SHIN, Gi Chang, Daejeon 34122 (KR); SEOL, Jeong Soo, Daejeon 34122 (KR)
(74) Representative: Plasseraud IP
(86) International application number: PCT/KR2024/014905
(87) International publication number: WO 2025/075371

(57) **Abstract**

Disclosed herein relates to a bobbin replacement method for automatically connecting an electrode sheet to a new bobbin via a control part. Specifically, the bobbin replacement method of the present disclosure includes: a first winding step of winding an electrode sheet onto a first bobbin; a step of preparing a second bobbin with double-sided tape and a marking sticker attached to one side, and disposed to be spaced apart from the electrode sheet by a predetermined distance; a positioning step for adjusting the stop position of the second bobbin by rotating the second bobbin; an attachment step of moving the second bobbin so that the double-sided tape is attached to the electrode sheet; a cutting step of cutting an electrode sheet extending between the first bobbin on which the electrode sheet is wound and the second bobbin; and a second winding step of rotating the second bobbin to wind the electrode sheet onto the second bobbin, wherein in the positioning step, the control part controls a stop position of the second bobbin based on a position of the marking sticker.

## Description

### [Technical Field]

The present disclosure relates to a bobbin replacement method, and more specifically to a bobbin replacement method that can efficiently automate the replacement of a bobbin that winds electrode sheets.

This application claims the benefit of priority from Korean Patent Application No. 10-2023-0132331, filed on Oct. 5, 2023, the disclosures of which are incorporated herein by reference.

### [Background]

Unwinders and rewinders are used to transport electrode sheets in a roll-to-roll state for the manufacture of secondary batteries. In these unwinders and rewinders, rolls of electrode sheets are chucked and coupled together, and the electrode sheets travel between the unwinder and rewinder in a roll-to-roll state and subjected to predetermined processing.

The electrode sheet rolls chucked into the unwinder and rewinder are wound electrodes on a bobbin. When the electrode sheet is wound on the bobbin, if the electrode sheet is immediately wound on the bobbin, the wound electrode portion becomes a usable loss. Therefore, instead of directly connecting the electrode sheet to the bobbin, a vinyl material base film or the like is first wound onto the bobbin, and then the electrode sheet is connected to the wound base film.

In this case, a transparent double-sided tape may be used to attach the electrode sheet to the base film, but since the double-sided tape is not recognized by a visual sensor or the like due to its transparency, a problem arises that the process is delayed until the conventional visual sensor confirms the position of the double-sided tape.

As a result of the above problem, a human operator is used to check the position of the double-sided tape, but this method is very cumbersome and reduces the efficiency of the process.

### [Related art document]

Korean Public Patent No. 10-2020-0136198

### [Summary]

### [Technical Problem]

Accordingly, the present disclosure was invented to solve the above problems and aims to provide a method for automatically attaching the electrode sheet to a new bobbin during the process of winding an electrode sheet.

Further, the present disclosure aims to provide a method for efficiently performing the attachment, in the process of attaching the electrode sheet to a new bobbin.

Other objects and advantages of the present disclosure will be understood from the following description, and will become more apparent from the embodiments of the present disclosure. It will also be readily apparent that the objects and advantages of the present disclosure may be instantiated by the means and combinations thereof disclosed in the patent claims.

### [Technical Solution]

According to the present disclosure, there is provided a bobbin replacement method for automatically connecting an electrode sheet to a new bobbin via a control part. The bobbin replacement method includes: a first winding step of winding an electrode sheet onto a first bobbin; a step of preparing a second bobbin with double-sided tape and a marking sticker attached to same side, and disposed to be spaced apart from the electrode sheet by a predetermined distance; a positioning step for adjusting the stop position of the second bobbin by rotating the second bobbin; an attachment step of moving the second bobbin so that the double-sided tape is attached to the electrode sheet; a cutting step of cutting an electrode sheet extending between the first bobbin on which the electrode sheet is wound and the second bobbin; and a second winding step of rotating the second bobbin to wind the electrode sheet onto the second bobbin, wherein in the positioning step, the control part controls the stop position of the second bobbin based on a position of the marking sticker.

A base film is provided around a perimeter of the second bobbin, wherein the double-sided tape may be disposed on the base film.

The base film may include polyethylene terephthalate.

The second bobbin includes a marking sticker on one side, wherein the marking sticker may be attached in a position corresponding to the double-sided tape.

The marking sticker may be located on a side part of the double-sided tape relative to a longitudinal direction of the second bobbin.

The marking sticker may be located on at least one among upper and lower parts of the double-sided tape relative to a width direction of the second bobbin.

The marking sticker may be located at a position where it overlaps the double-sided tape.

The marking sticker may be in a form of either a dot or a line.

The control part may recognize the marking sticker corresponding to a position of the double-sided tape via a color sensor.

The double-sided tape comprises a colorless material that is substantially transparent in a visible light range, and the marking sticker comprises a colored material, wherein the color sensor may recognize a color of the marking sticker.

The control part recognizes a position of the double-sided tape based on the position of the marking sticker, wherein in the positioning step, the control part may rotate the second bobbin such that the double-sided tape is opposed to a surface of the electrode sheet.

The control part may stop the rotation of the second bobbin when the double-sided tape is in a position opposite the electrode sheet, and may move the stopped second bobbin to the electrode sheet to control the double-sided tape to be attached to the electrode sheet.

The control part may control a cutting unit having a blade at an end to cut an electrode sheet adjacent to the second bobbin in a width direction of the electrode sheet.

The second bobbin is rotatable about a rotational axis and may be configured to advance and retreat relative to the electrode sheet.

### [Advantageous Effects]

According to the present disclosure, the efficiency of the process can be improved by automating the process of connecting the electrode sheet being wound to a new bobbin. Furthermore, wasted electrode sheets can be reduced during the process of connecting the electrode sheets to the bobbin.

### [Brief Description of the Drawings]

FIG. 1 is a perspective view of an electrode sheet being wound onto a bobbin and a winding unit according to a first embodiment of the present disclosure.
FIG. 2 is a flowchart of the bobbin replacement method of the present disclosure.
FIG. 3 is a schematic illustration of the process flow for the positioning step to the cutting step.
FIG. 4 is a perspective view of the second bobbin rotating during the positioning step.
FIG. 5 is a perspective view of a cutting unit of the present disclosure.
FIG. 6 is a perspective view of the winding unit showing the process of cutting the electrode sheet with the cutting unit of FIG. 5.
FIG. 7 is a perspective view of a second bobbin according to a second embodiment of the present disclosure.
FIG. 8 is a perspective view of a second bobbin according to a third embodiment of the present disclosure.
FIG. 9 is a perspective view of a second bobbin according to a fourth embodiment of the present disclosure.
FIG. 10 is a perspective view of a second bobbin according to a fifth embodiment of the present disclosure.

### [Best Mode for Carrying out the Disclosure]

Hereinafter, preferred embodiments of the present disclosure will be described in detail with reference to the accompanying drawings. Prior to this, it should be noted that the terms or words used in this specification and the claims are not to be construed in their ordinary or dictionary sense, but rather in a sense and concept consistent with the technical idea of the disclosure, based on the principle that the inventor may properly define the concept of a term to best describe his/her disclosure.

Accordingly, it is to be understood that the embodiments described herein and the configurations illustrated in the drawings are only the most preferred embodiments of the disclosure and are not intended to be exhaustive of the technical ideas of the disclosure, and that there may be various equivalents and modifications that may be substituted for them at the time of filing.

Furthermore, in describing the disclosure, specific descriptions of related known configurations or features are omitted where it is determined that such detailed descriptions would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

The present disclosure relates to a bobbin replacement method, and more specifically to a bobbin replacement method that can efficiently automate the replacement of a bobbin that winds electrode sheets.

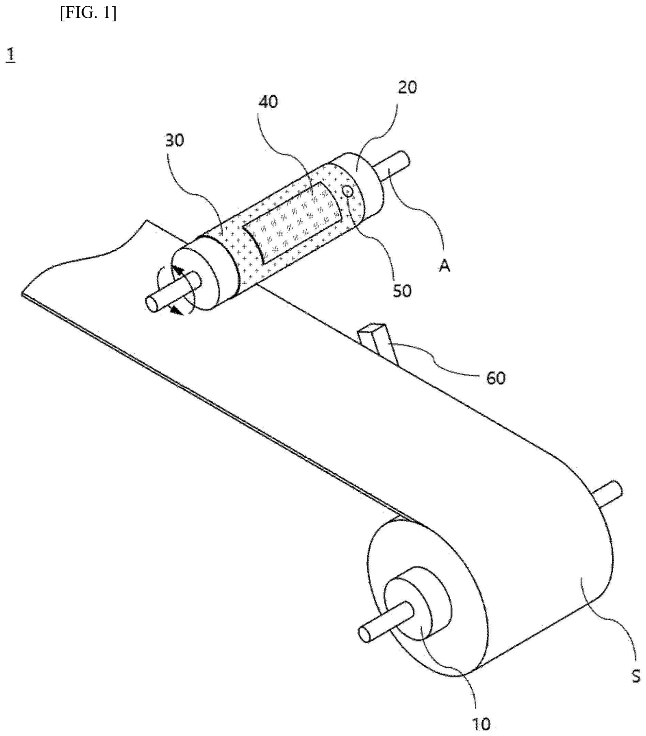

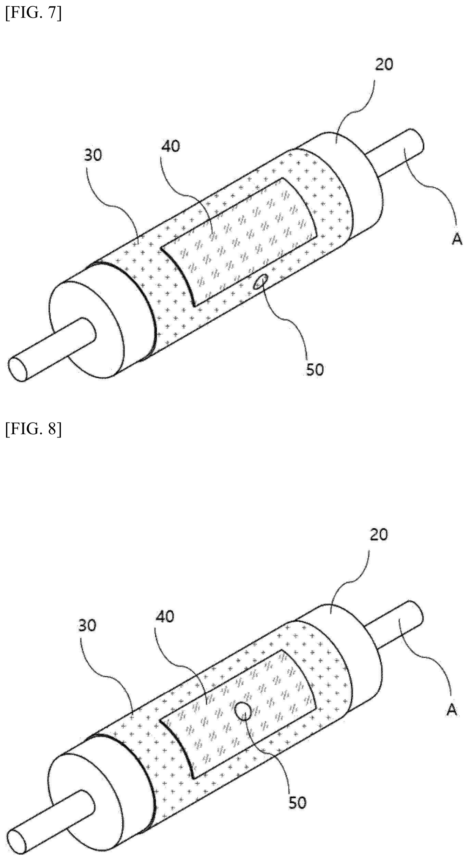

FIGS. 1 to 6 relate to a winding unit and a bobbin replacement method according to the first embodiment of the present disclosure, and FIGS. 7 to 10 relate to a winding unit according to the second to fifth embodiments of the present disclosure, respectively.

Hereinafter, with reference to the accompanying drawings, the present disclosure, including the empty bobbin and a bobbin replacement method utilizing the same, will be described in detail. For reference, relative positioning designations such as front to back, up and down, and left and right used in the following description are intended to aid in understanding the disclosure and refer to the orientation shown in the drawings unless otherwise defined.

Here, the longitudinal direction of the electrode sheet corresponds to the direction in which the electrode sheet is traveling, and the width direction of the electrode sheet corresponds to a direction orthogonal to the longitudinal direction of the electrode sheet.

Further, the width direction of the bobbin refers to the longitudinal direction of the electrode sheet, and the longitudinal direction of the bobbin refers to the width direction of the electrode sheet.

### (First embodiment)

### Winding Unit (1)

FIG. 1 is a perspective view of an electrode sheet S being wound on a bobbin and a winding unit 1 according to a first embodiment of the present disclosure.

The winding unit 1 includes a bobbin for winding the electrode sheet S, a color sensor 60 for detecting the position of the bobbin, and a cutting unit 70 for cutting the electrode sheet S in the width direction of the electrode sheet S.

The bobbin includes a first bobbin 10 for winding electrode sheets S in advance as shown in FIG. 1, and a second bobbin 20 waiting to take over from the first bobbin 10 to wind the electrode sheets S subsequently when the amount of electrode sheets S wound on the first bobbin 10 exceeds a certain amount.

The bobbin includes a double-sided tape 40 and a marking sticker 50 on same side.

The double-sided tape 40 is used for attaching the electrode sheet S, with one side being attached to the perimeter of the bobbin, and the other side remaining exposed to the outside until it is attached to the electrode sheet S.

The double-sided tape 40 comprises a vinyl film with an adhesive or a sticking agent applied to both sides.

The double-sided tape 40 comprises a colorless material. More specifically, the double-sided tape 40 comprises a colorless material that is substantially transparent in the visible light range.

The marking sticker 50 is included in a position corresponding to the double-sided tape 40, and is colored.

The winding unit 1 of the present disclosure may further include a base film 30 wrapped around the perimeter of the bobbin. The base film 30 serves the purpose of protecting the electrode sheet S, or of replacing parts of the electrode sheet S that may be discarded during the process due to damage or the like.

The base film 30 is specifically attached to the surface of the bobbin in close contact, and the double-sided tape 40 and marking sticker 50 are prepared by being attached to the base film 30 attached to the bobbin.

The base film 30 comprises a plastic material. For example, it may include a polyethylene terephthalate material.

The bobbin is not only rotatable about the rotational axis A, but is also configured to be movable in both horizontal and vertical directions. Thus, it is possible to adjust the position of the first bobbin 10 winding the electrode sheet S, and also to adjust the position of the second bobbin 20 waiting for it.

The color sensor 60 is a sensor capable of recognizing a specific color, preferably the color of the marking sticker 50 included on the bobbin.

The color sensor 60 is disposed adjacent to the second bobbin 20 in a position that does not interfere with the transfer of the electrode sheet S and the movement of the bobbin. In this case, the color sensor 60 is disposed to face the second bobbin 20 as shown in FIG. 1.

The cutting unit 70 is used for the purpose of breaking and separating the electrode sheet S wound on the first bobbin 10 and the electrode sheet S attached to the second bobbin 20.

More specific details of the cutting unit 70 will be described in the cutting step of the bobbin replacement method to be described below.

The winding unit 1 of the present disclosure has its operation controlled by means of a control part. That is, the control part can control the rotation and movement of the bobbin.

The control part receives information in advance about the first bobbin 10, the path of the electrode sheet S being wound, the second bobbin 20 waiting on the electrode sheet S, and the attachment positions of the double-sided tape 40 and the marking sticker 50 on the second bobbin 20, and controls the operation of the bobbin based on the information to replace the first bobbin 10 with the second bobbin 20.

The control part receives the position information of the marking sticker 50 recognized by the color sensor 60. Subsequently, the control part may estimate the position of the double-sided tape 40 based on the position of the marking sticker 50.

Specifically, the control part estimates the position of the double-sided tape 40 in reverse from the position information of the marking sticker 50 sent by the color sensor 60, based on the previously inputted position information of the marking sticker 50 and the double-sided tape 40.

Consequently, the control part controls the rotation of the second bobbin 20 so that the double-sided tape 40 is finally in a position opposite to the surface of the electrode sheet S being wound on the first bobbin 10.

### Bobbin replacement method

The bobbin replacement method of the present disclosure is characterized in that, in connecting the electrode sheet S to a new bobbin, all processes are performed automatically through the control of a control part to ensure that the replacement operation is performed accurately.

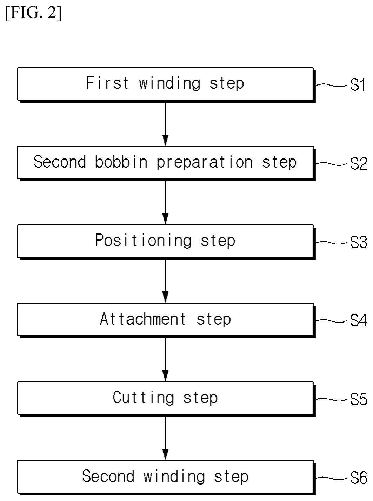

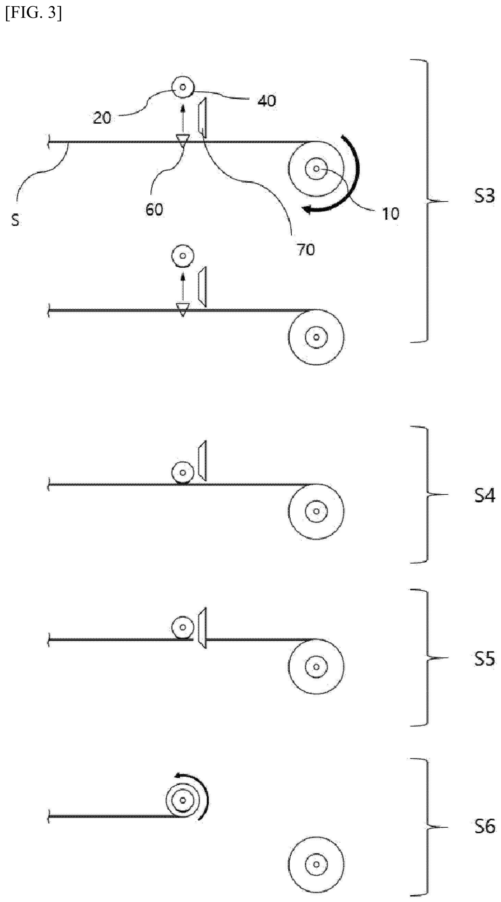

FIG. 2 is a flowchart of the bobbin replacement method of the present disclosure, and FIG. 3 is a schematic diagram outlining the process flow for the positioning step to the cutting step.

Referring to FIG. 2, the bobbin replacement method of the present disclosure can be divided into a bobbin preparation step, an empty bobbin preparation step, a positioning step, an attachment step, a cutting step, and a winding step.

### (S1) First winding step

This is a step of winding the electrode sheet S onto the first bobbin 10.

The electrode sheet S is transferred in one direction toward the first bobbin 10.

The first bobbin 10 rotates unidirectionally about the rotational axis A, and the electrode sheet S connected to the first bobbin 10 is wound under tension by the rotation of the first bobbin 10.

The first bobbin 10 is rotated by a separately connected motor, and the transfer speed and winding speed of the electrode sheet can be adjusted according to the output of the motor.

### (S2) Second bobbin 20 preparation step

This is a step of preparing a second bobbin 20 having double-sided tape 40 and marking sticker 50 attached on one side and disposed to be spaced apart from the electrode sheet S at a predetermined distance.

The second bobbin 20 includes a double-sided tape 40 and a marking sticker 50 on one side, as shown in FIG. 1.

The second bobbin 20 is rotatable about the rotational axis A and is configured to be movable up to the electrode sheet S wound on the first bobbin 10. That is, the second bobbin 20 is configured to advance and retreat with respect to the electrode sheet S. In this case, the second bobbin 20 is configured so that its rotational axis A is parallel to the rotational axis A of the first bobbin 10.

Since the second bobbin 20 is to be operated independently of the first bobbin 10, the second bobbin 20 is rotated by a motor separate and distinct from the motor connected to the first bobbin 10.

In some embodiments, a base film 30 may be provided around the perimeter of the second bobbin 20, and the double-sided tape 40 and marking sticker 50 may be disposed on the base film 30.

The base film 30 comprises a plastic material. For example, the base film 30 may include polyethylene terephthalate.

The second bobbin 20 included in the winding unit 1 according to the first embodiment of the disclosure has the marking sticker 50 positioned side by side on the side part of the double-sided tape 40 with respect to the longitudinal direction of the second bobbin 20, as shown in FIG. 1.

In some embodiments, the marking sticker 50 may be in the form of a dot as shown in FIG. 1.

In addition, a color sensor 60 capable of recognizing the marking sticker 50 on the second bobbin 20 may be disposed and prepared in this step or in a previous step.

The color sensor 60 is fixed and disposed to face the second bobbin 20 in the space between the first bobbin 10 and the second bobbin 20. More specifically, the color sensor 60 is disposed so that at the time of recognizing the marking sticker 50, the double-sided tape 40 on the second bobbin 20 is in a position exactly opposite to the electrode sheet S. Thus, the double-sided tape 40 attached to the second bobbin 20 is opposite to the electrode sheet S at the time when the color sensor 60 recognizes the marking sticker 50.

### (S3) Positioning step

This is a step of adjusting the stop position of the second bobbin 20 by rotating the second bobbin 20.

The control part of the present disclosure causes the second bobbin 20 to idle so that the color sensor 60 can recognize the marking sticker 50 on the second bobbin 20, as shown in FIG. 3.

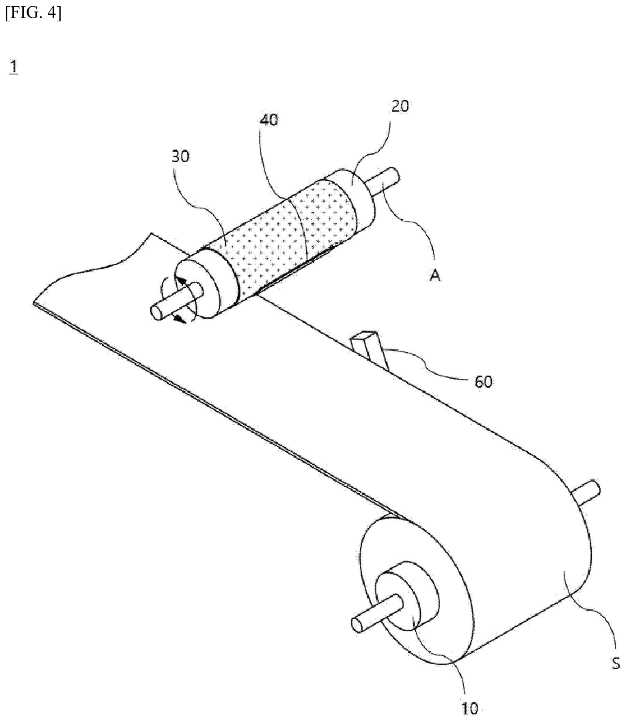

FIG. 4 is a perspective view of the second bobbin 20 rotating during the positioning step.

Based on the positional relationship of the marking sticker 50 and the double-sided tape 40 and the position information of the electrode sheet S received in advance, the control part rotates the second bobbin 20 so that the double-sided tape 40 is opposite the surface of the electrode sheet S. Subsequently, the control part stops the rotation of the second bobbin 20 when the color sensor 60 recognizes the marking sticker 50, as shown in FIGS. 2 and 4. That is, at the time when the second bobbin 20 is stopped, the double-sided tape 40 on the second bobbin 20 is opposed to the upper surface of the electrode sheet S.

### (S4) Attachment step

This is a step of moving the second bobbin 20 so that the double-sided tape 40 is attached to the electrode sheet S.

The control part moves the second bobbin 20 in a straight line to the electrode sheet S with the double-sided tape 40 opposing the electrode sheet S, as shown in FIG. 3.

Thus, the double-sided tape 40 on the second bobbin 20 is attached to the electrode sheet S in a state in which it is interposed between the second bobbin 20 and the surface of the electrode sheet S.

One side of the electrode sheet S, which is attached to the double-sided tape 40, is fixed to the second bobbin 20 by the double-sided tape 40.

### (S5) Cutting step

This is a step of cutting the electrode sheet S extending between the first bobbin 10 on which the electrode sheet S is wound and the second bobbin 20.

The cutting is performed by a cutting unit 70 including a blade 71 at its end.

More specifically, the control part controls the cutting unit 70, which has a blade 71 at its end, to cut the electrode sheet S adjacent to the second bobbin 20 in the width direction.

The cutting unit 70 may be in the shape of a plate erected vertically with respect to the surface of the electrode sheet S.

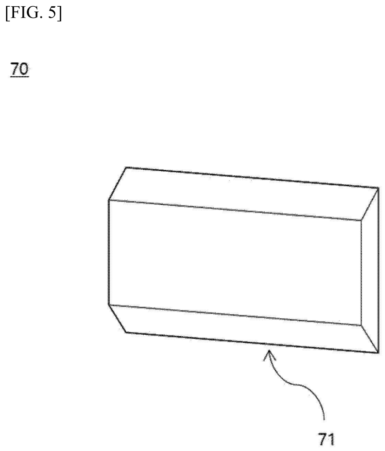

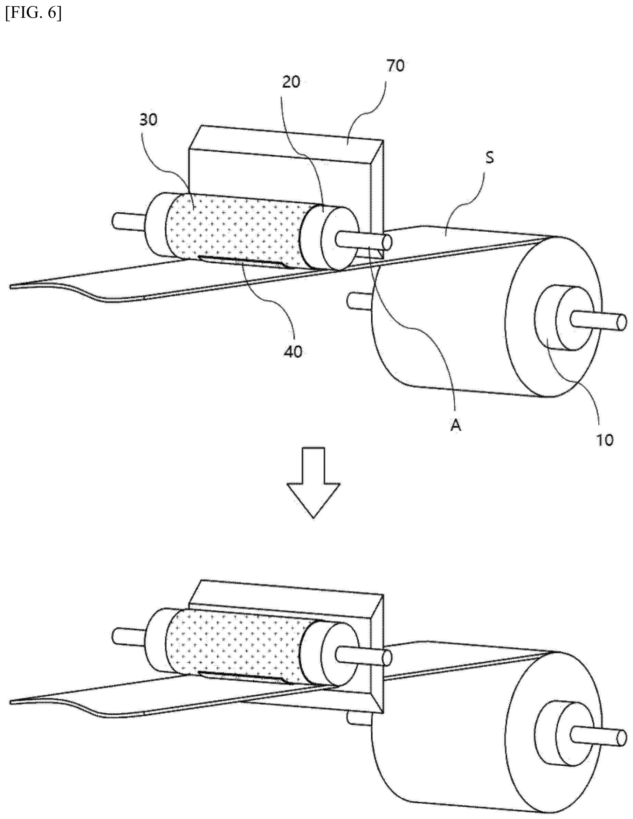

FIG. 5 is a perspective view of a cutting unit 70 that may be used in some embodiments, and FIG. 6 is a perspective view of the winding unit 1 illustrating the process of cutting the electrode sheet S with the cutting unit 70 of FIG. 5.

The cutting unit 70 has a blade 71 formed at the lower end as shown in FIG. 5, and can cut the electrode sheet S passing through the lower part as shown in FIGS. 3 and 6 in an up-and-down perpendicular movement.

The cutting proceeds along the width direction of the electrode sheet S, and by the cutting, the electrode sheet S connected to the first bobbin 10 is completely separated from the electrode sheet S connected to the second bobbin 20.

However, the cutting unit 70 is not limited to the shape shown in FIGS. 5 and 6, and may be of any shape capable of cutting the electrode sheet S in the width direction of the electrode sheet S. For example, the cutting unit 70 may be a rotating circular blade 71.

### (S6) Second winding step

This is a step of winding the electrode sheet S onto the second bobbin 20 by rotating the second bobbin 20.

According to FIG. 3, the first bobbin 10 with a certain amount of electrode sheets S wound on it is separated and moved to another process, and the remaining electrode sheets S are wound on the second bobbin 20 again by rotation of the second bobbin 20.

### (Second through Fifth Embodiments)

### Winding Unit (1)

The marking sticker 50 included in the winding unit 1 of the present disclosure can be provided at various positions, not only at the side part of the second bobbin 20. That is, as long as the control part of the present disclosure recognizes the positional relationship of the double-sided tape 40 and the marking sticker 50, the position of the marking sticker 50 can be varied.

In other words, the marking sticker 50 may be positioned on at least one among the upper and lower parts of the double-sided tape 40 relative to the width direction of the second bobbin 20, or may be positioned so as to be superimposed on the double-sided tape 40.

Furthermore, the marking sticker 50 may be provided in the form of a line, unlike the marking sticker 50 included in the winding unit 1 according to the first embodiment.

FIG. 7 is a perspective view of a second bobbin 20 according to the second embodiment of the present disclosure.

The marking sticker 50 provided on the second bobbin 20 is located on the lower part of the double-sided tape 40 relative to the width direction of the second bobbin 20.

In this case, the color sensor 60 can be positioned on the same horizontal line on the front or rear surface of the second bobbin 20 to recognize the marking sticker 50. That is, a degree of freedom for the placement of the color sensor 60 may be increased.

FIG. 8 is a perspective view of the second bobbin 20 according to the third embodiment of the present disclosure.

Referring to FIG. 8, the marking sticker 50 is positioned to be overlapped within the double-sided tape 40.

In this case, the double-sided tape 40 with the marking sticker 50 attached thereto is attached at one time, without the need to perform two processes of attaching the double-sided tape 40 and the marking sticker 50 on the second bobbin 20 or the base film 30 respectively.

In other words, the double-sided tape 40 with the marking sticker 50 attached has the effect of simplifying the process and thus improving efficiency.

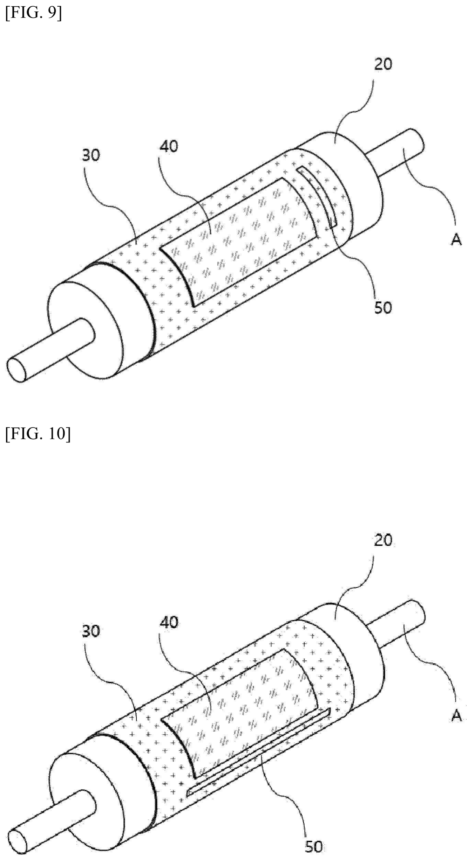

FIG. 9 is a perspective view of the second bobbin 20 according to the fourth embodiment of the present disclosure.

Referring to FIG. 9, the marking sticker 50 is provided in the form of a line on the side part of the double-sided tape 40. Specifically, the marking sticker 50 extends along the direction of rotation of the second bobbin 20, i.e. along the perimeter direction of the second bobbin 20.

The marking sticker 50 has the effect of providing a larger area that can be recognized by the color sensor 60, thereby increasing the recognition accuracy of the color sensor 60.

FIG. 10 is a perspective view of the second bobbin 20 according to the fifth embodiment of the present disclosure.

Referring to FIG. 10, the marking sticker 50 extends from the lower part of the double-sided tape 40 along the width direction of the second bobbin 20.

In this case, it has the advantage that the effect of the marking sticker 50 according to the second embodiment and the fourth embodiment can be obtained simultaneously.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

### [Description of Reference Numerals]

1: WINDING UNIT
10: FIRST BOBBIN
20: SECOND BOBBIN
30: BASE FILM
40: DOUBLE-SIDED TAPE
50: MARKING STICKER
60: COLOR SENSOR
70: CUTTING UNIT
71: BLADE
S: ELECTRODE SHEET
A: ROTATIONAL AXIS

## Claims

1. A bobbin replacement method of automatically connecting an electrode sheet to a new bobbin via a control part, comprising:
a first winding step of winding an electrode sheet onto a first bobbin;
a step of preparing a second bobbin with double-sided tape and a marking sticker attached to same side, and disposed to be spaced apart from the electrode sheet by a predetermined distance;
a positioning step for adjusting a stop position of the second bobbin by rotating the second bobbin;
an attachment step of moving the second bobbin so that the double-sided tape is attached to the electrode sheet;
a cutting step of cutting the electrode sheet extending between the first bobbin on which the electrode sheet is wound and the second bobbin; and
a second winding step of rotating the second bobbin to wind the electrode sheet onto the second bobbin, wherein
in the positioning step, the control part controls the stop position of the second bobbin based on a position of the marking sticker.

2. The bobbin replacement method of claim 1, wherein
a base film is provided around a perimeter of the second bobbin,
the double-sided tape is disposed on the base film.

3. The bobbin replacement method of claim 2, wherein
the base film includes polyethylene terephthalate.

4. The bobbin replacement method of claim 1, wherein
the second bobbin includes a marking sticker on one side, wherein
the marking sticker is attached in a position corresponding to the double-sided tape.

5. The bobbin replacement method of claim 4, wherein
the marking sticker is located on a side part of the double-sided tape relative to a longitudinal direction of the second bobbin.

6. The bobbin replacement method of claim 4, wherein
the marking sticker is located on at least one among an upper and lower parts of the double-sided tape relative to a width direction of the second bobbin.

7. The bobbin replacement method of claim 4, wherein
the marking sticker is located at a position where it overlaps the double-sided tape.

8. The bobbin replacement method of claim 4, wherein
the marking sticker is in a form of either a dot or a line.

9. The bobbin replacement method of claim 4, wherein
the control part recognizes the marking sticker corresponding to a position of the double-sided tape via a color sensor.

10. The bobbin replacement method of claim 9, wherein
the double-sided tape comprises a colorless material that is substantially transparent in a visible light range, and the marking sticker comprises a colored material,
the color sensor recognizes a color of the marking sticker.

11. The bobbin replacement method of claim 9, wherein
the control part recognizes the position of the double-sided tape based on the position of the marking sticker,
in the positioning step, the control part rotates the second bobbin such that the double-sided tape is opposed to a surface of the electrode sheet.

12. The bobbin replacement method of claim 11, wherein
the control part stops the rotation of the second bobbin when the double-sided tape is in a position opposite the electrode sheet, and moves the stopped second bobbin to the electrode sheet to control the double-sided tape to be attached to the electrode sheet.

13. The bobbin replacement method of claim 1, wherein
the control part controls a cutting unit having a blade at an end to cut the electrode sheet adjacent to the second bobbin in a width direction.

14. The bobbin replacement method of claim 1, wherein
the second bobbin is rotatable about a rotational axis and configured to advance and retreat relative to the electrode sheet.
